# EUROPEAN PATENT SPECIFICATION

(11) **EP 4 250 419 B1**
(45) Date of publication and mention of the grant of the patent: **21.10.2026**
(21) Application number: 21910600.2
(22) Date of filing: 16.12.2021
(51) Int. Cl.: H01M 10/052, H01G 11/06, H01G 11/52, H01G 11/64, H01M 10/0567, H01M 50/451, H01M 50/491, H01M 4/131, H01M 4/505, H01M 4/525, H01M 4/587, H01M 10/0525, H01M 10/0569, H01M 50/409, H01M 50/417, H01M 50/434, H01M 50/443, H01M 50/489, H01M 4/38

(54) **NONAQUEOUS ELECTROLYTE ENERGY STORAGE DEVICE, ELECTRONIC DEVICE, AND AUTOMOBILE**
ENERGIESPEICHERELEMENT MIT WASSERFREIEM ELEKTROLYT, ELEKTRONISCHE VORRICHTUNG UND AUTOMOBIL
ÉLÉMENT DE STOCKAGE D'ÉNERGIE À ÉLECTROLYTE NON AQUEUX, DISPOSITIF ÉLECTRONIQUE ET AUTOMOBILE

(30) Priority: 21.12.2020 JP 2020211356
(43) Date of publication of application: 27.09.2023
(73) Proprietor: GS Yuasa International Ltd., Kisshoin, Minami-ku, Kyoto-shi, Kyoto 601-8520 (JP)
(72) Inventor: TSUCHIKAWA Tomoya, Kyoto-shi, Kyoto 601-8520 (JP); OKAJIMA Takashi, Kyoto-shi, Kyoto 601-8520 (JP); UEHARA Naoki, Kyoto-shi, Kyoto 601-8520 (JP)
(74) Representative: Isarpatent
(86) International application number: PCT/JP2021/046557
(87) International publication number: WO 2022/138452

(56) References cited:
- WO-A1-2011/136189
- WO-A1-2013/015231
- WO-A1-2013/054511
- WO-A1-2013/084393
- WO-A1-2014/046094
- CN-A- 110 943 215
- US-A1- 2014 335 426

## Description

### TECHNICAL FIELD

The present invention relates to a nonaqueous electrolyte energy storage device, an electronic device, and an automobile.

### BACKGROUND ART

Nonaqueous electrolyte secondary batteries typified by lithium ion nonaqueous electrolyte secondary batteries are widely in use for electronic equipment such as personal computers and communication terminals, automobiles, and the like because the batteries have high energy density. The nonaqueous electrolyte secondary battery is generally provided with an electrode assembly with a pair of electrodes electrically isolated by a separator, and a nonaqueous electrolyte interposed between the electrodes and is configured to be charged and discharged by transferring ions between both the electrodes. In addition, capacitors such as lithium ion capacitors and electric double layer capacitors are also widely used as nonaqueous electrolyte energy storage devices other than the nonaqueous electrolyte secondary batteries.

While the nonaqueous electrolyte energy storage devices have a high energy density, the devices are found to undergo a decrease in performance such as an increase in internal resistance due to repeated charge-discharge and long-term storage. For suppressing such a decrease in the performance of the nonaqueous electrolyte energy storage devices, the addition of various additives to the nonaqueous electrolytes has been studied. For example, a compound having an S-O bond has been proposed as an additive to a nonaqueous electrolyte (see Patent Document 1).

### PRIOR ART DOCUMENT

### PATENT DOCUMENT

Patent Document 1: JP-A-11-162511 D1: CN 110 943 215 A (NINGDE CONTEMPORARY AMPEREX TECH CO LTD) 31 March 2020 (2020-03-31). D1 describes that the cyclic disulfonate compound used as an electrolyte additive can effectively reduce the resistance of the solid electrolyte interphase (SEI) film, thereby effectively improving the cyclic performance of the lithium-ion secondary battery.

### SUMMARY OF THE INVENTION

### PROBLEMS TO BE SOLVED BY THE INVENTION

The nonaqueous electrolyte energy storage devices mounted as energy sources for automobiles and the like are used under severe temperature conditions. For example, when the nonaqueous electrolyte energy storage devices are used in summertime, the environmental temperatures to which the nonaqueous electrolyte energy storage devices are exposed may reach high temperatures around 60°C, depending on the locations where the nonaqueous electrolyte energy storage devices are mounted. In particular, a nonaqueous electrolyte energy storage device repeatedly charged and discharged in a high-temperature environment or a nonaqueous electrolyte energy storage device stored for a long period of time in a high-temperature environment, however, may have the possibility of undergoing a significant increase in direct-current resistance.

The present invention has been made in view of the foregoing circumstances, and an object of the present invention is to provide a nonaqueous electrolyte energy storage device that is excellent in the effect of suppressing an increase in direct-current resistance associated with a charge-discharge cycle. In addition, another object of the present invention is to provide an electronic device and an automobile each including a nonaqueous electrolyte energy storage device that is excellent in the effect of suppressing an increase in direct-current resistance associated with a charge-discharge cycle.

### MEANS FOR SOLVING THE PROBLEMS

A nonaqueous electrolyte energy storage device according to an aspect of the present invention includes: a separator including a porous substrate layer; and a nonaqueous electrolyte, where the substrate layer has a porosity of 44% or more, and the nonaqueous electrolyte contains a cyclic disulfone compound wherein the separator includes an inorganic layer layered on the substrate layer, wherein the lower limit of the average thickness of the inorganic layer is 1 µm and the upper limit of the average thickness of the inorganic layer is 10 µm.

Another aspect of the present invention is an electronic device including a nonaqueous electrolyte energy storage device according to the aspect of the present invention.

Another aspect of the present invention is an automobile including a nonaqueous electrolyte energy storage device according to the aspect of the present invention.

### ADVANTAGES OF THE INVENTION

The nonaqueous electrolyte energy storage device according to an aspect of the present invention is excellent in the effect of suppressing an increase in direct-current resistance associated with a charge-discharge cycle. In addition, the electronic device and the automobile can be provided, each of which includes the nonaqueous electrolyte energy storage device that is excellent in the effect of suppressing an increase in direct-current resistance associated with a charge-discharge cycle.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus including a plurality of nonaqueous electrolyte energy storage devices.

### MODE FOR CARRYING OUT THE INVENTION

First, an outline of a nonaqueous electrolyte energy storage device disclosed in the present specification will be described.

A nonaqueous electrolyte energy storage device according to an aspect of the present invention includes: a separator including a porous substrate layer; and a nonaqueous electrolyte, where the substrate layer has a porosity of 44% or more, and the nonaqueous electrolyte contains a cyclic disulfone compound wherein the separator includes an inorganic layer layered on the substrate layer, wherein the lower limit of the average thickness of the inorganic layer is 1 µm and the upper limit of the average thickness of the inorganic layer is 10 µm.

The nonaqueous electrolyte energy storage device according to claim 1 includes: the separator including the porous substrate layer; and the nonaqueous electrolyte, where the substrate layer has a porosity of 44% or more, and the nonaqueous electrolyte contains a cyclic disulfone compound, and thus, the device is excellent in the effect of suppressing an increase in direct-current resistance associated with a charge-discharge cycle. The reason for this is unknown but is considered as follows.

As one of factors that increase the resistance of a nonaqueous electrolyte energy storage device, it is known that a decomposition product from the nonaqueous electrolyte decomposed on the negative electrode reaches the positive electrode and deteriorates the positive electrode. In the nonaqueous electrolyte energy storage device, the cyclic disulfone compound contained in the nonaqueous electrolyte is decomposed by the electrochemical oxidative-reductive reaction at the time of the charge-discharge reaction to form a protective film on the surface of the negative electrode, thereby keeping the other components of the nonaqueous electrolyte from being decomposed on the negative electrode, and thus keeping an increase in direct-current resistance associated with a charge-discharge cycle. Furthermore, the porosity of the substrate layer of the separator is 44% or more, thereby increasing the ion permeability, and thus reducing the internal resistance (alternating current resistance) of the nonaqueous electrolyte energy storage device. As a result, in addition to the effect of suppressing an increase in direct-current resistance associated with a charge-discharge cycle with the addition of the cyclic disulfone compound, a synergistic effect can be obtained by, for example, further promoting the reaction of the cyclic disulfone compound as the charge-discharge reaction of the positive and negative electrodes proceeds to a deeper level by the reduction in internal resistance with the high porosity of the substrate layer. Accordingly, the nonaqueous electrolyte energy storage device is presumed to be excellent in the effect of suppressing an increase in direct-current resistance associated with a charge-discharge cycle. In this regard, the "porosity" is a volume-based value, which is calculated from the mass per unit area, thickness, and true density of the constituent material.

The separator mentioned above preferably has an inorganic layer layered on the substrate layer. The separator has the inorganic layer layered on the substrate layer, thereby allowing the decomposition product from the nonaqueous electrolyte decomposed on the negative electrode to be kept form being trapped in the inorganic layer and from reaching the positive electrode, and thus, the effect of suppressing an increase in direct-current resistance associated with a charge-discharge cycle can be further enhanced.

The cyclic disulfone compound mentioned above is preferably 2,4-dialkyl-1,3-dithietane-1,1,3,3-tetraoxide. The cyclic disulfone compound is 2,4-dialkyl-1,3-dithietane-1,1,3,3-tetraoxide, thereby allowing the effect of suppressing an increase in direct-current resistance associated with a charge-discharge cycle to be further enhanced.

The nonaqueous electrolyte mentioned above is preferably substantially composed only of a lithium salt, a carbonate, and a cyclic disulfone compound. The nonaqueous electrolyte is composed of such components, thereby allowing the effect of suppressing an increase in direct-current resistance associated with a charge-discharge cycle to be further enhanced. It is to be noted that the fact that the nonaqueous electrolyte is substantially composed only of the lithium salt, the carbonate, and the cyclic disulfone compound means that any compound other than the lithium salt, the carbonate, and the cyclic disulfone compound is not contained at least intentionally.

The porosity of the substrate layer mentioned above is preferably 48% or more. The porosity of the substrate layer is set to be equal to or more than the above-mentioned lower limit, thereby allowing the effect of suppressing an increase in direct-current resistance associated with a charge-discharge cycle to be further enhanced.

The porosity of the substrate layer is preferably 60% or less. The porosity of the substrate layer is set to be equal to or less than the above-mentioned upper limit, thereby allowing the strength of the substrate layer to be improved.

The content of the above-mentioned cyclic disulfone compound contained in the nonaqueous electrolyte is preferably 0.5% by mass or more with respect to the total mass of the nonaqueous electrolyte. Such a content allows the effect of suppressing an increase in direct-current resistance associated with a charge-discharge cycle to be further enhanced.

The content of the above-mentioned cyclic disulfone compound contained in the nonaqueous electrolyte is preferably 1.5% by mass or less with respect to the total mass of the nonaqueous electrolyte. Such a content allows the effect of suppressing an increase in direct-current resistance associated with a charge-discharge cycle to be further enhanced.

Preferably, the nonaqueous electrolyte energy storage device includes a positive electrode including a positive active material, and the positive active material is one of, or a combination of two or more of lithium-transition metal composite oxides that have an α-NaFeO₂-type crystal structure, and lithium-transition metal oxides that have a spinel-type crystal structure, polyanion compounds. Including such a positive electrode allows favorable performance to be obtained.

Preferably, the nonaqueous electrolyte energy storage device includes a negative electrode including a negative active material, and the negative active material is one of graphite, non-graphite carbon, an oxide of Si, a simple substance of Si, and a lithium metal, or a combination two or more thereof. Including such a negative electrode allows favorable performance to be obtained.

The nonaqueous electrolyte energy storage device is preferably a lithium ion secondary battery. This allows favorable performance to be obtained.

An electronic device according to another aspect of the present invention includes the nonaqueous electrolyte energy storage device according to the aspect of the present invention. The electronic device includes the nonaqueous electrolyte energy storage device that is excellent in the effect of suppressing an increase in direct-current resistance associated with a charge-discharge cycle, thus providing favorable electronic device performance.

An automobile according to another aspect of the present invention includes the nonaqueous electrolyte energy storage device according to the aspect of the present invention. The automobile includes the nonaqueous electrolyte energy storage device that is excellent in the effect of suppressing an increase in direct-current resistance associated with a charge-discharge cycle, thus providing favorable automobile performance.

The configuration of a nonaqueous electrolyte energy storage device, the configuration of a nonaqueous electrolyte energy storage apparatus, and a method for manufacturing the nonaqueous electrolyte energy storage device according to an embodiment of the present invention, and other embodiments will be described in detail. It is to be noted that the names of the respective constituent members (respective constituent elements) used in the respective embodiments may be different from the names of the respective constituent members (respective constituent elements) used in the background art.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with a separator interposed therebetween, or a wound type obtained by winding a positive electrode and a negative electrode stacked with a separator interposed therebetween. The nonaqueous electrolyte is present to be impregnated in the positive electrode, the negative electrode, and the separator. A nonaqueous electrolyte secondary battery (hereinafter, also simply referred to as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω ·cm measured in accordance with JIS-H-0505 (1975) as a threshold. As the material of the positive substrate, a metal such as aluminum, titanium, tantalum, or stainless steel, or an alloy thereof is used. Among these, aluminum or an aluminum alloy is preferable from the viewpoint of electric potential resistance, high conductivity, and costs. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H4160 (2006).

The average thickness of the positive substrate is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive substrate is within the above-described range, it is possible to enhance the energy density per volume of a secondary battery while increasing the strength of the positive substrate.

The intermediate layer is a layer arranged between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer contains a positive active material. The positive active material layer contains optional components such as a conductive agent, a binder, a thickener, and a filler, if necessary.

The positive active material can be appropriately selected from known positive active materials. As the positive active material for a lithium ion secondary battery, a material capable of storing and releasing lithium ions is usually used. Examples of the positive active material include lithium-transition metal composite oxides that have an α-NaFeO₂-type crystal structure, lithium-transition metal composite oxides that have a spinel-type crystal structure, polyanion compounds, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < y < 1), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < y < 1), Li[LiₓNi_{γ}Mn_{β}Co_{(1-x-γ-β)}]O₂ (0 ≤ x < 0.5, 0 < y, 0 < β, 0.5 < y + β < 1), and Li[LiₓNi_{γ}Co_{β}Al_{(1-x-γ-β)}]O₂ (0 ≤ x < 0.5, 0 < y, 0 < β, 0.5 < y + β < 1). Examples of the lithium-transition metal composite oxides that have a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include titanium disulfide, molybdenum disulfide, and molybdenum dioxide. Some of atoms or polyanions in these materials may be substituted with atoms or anion species composed of other elements. The surfaces of these materials may be coated with other materials. In the positive active material layer, one of these materials may be used singly, or two or more thereof may be used in mixture. Among these materials, preferred is one of, or a combination of two or more of the lithium-transition metal composite oxides that have an α-NaFeO₂-type crystal structure, and lithium-transition metal oxides that have a spinel-type crystal structure, polyanion compounds. When the positive active material is a lithium-transition metal composite oxide that has an α-NaFeO₂-type crystal structure containing Ni and Mn, where the ratio of Ni in the transition metal is 40% or more, the deterioration of the positive active material is more likely to proceed, thereby the internal resistance of the nonaqueous electrolyte energy storage device is likely to be increased, and thus, the effect of the nonaqueous electrolyte energy storage device can be further provided.

The positive active material is typically particles (powder). The average particle size of the positive active material is preferably 0.1 µm or more and 20 µm or less, for example. By setting the average particle size of the positive active material to be equal to or greater than the lower limit, the positive active material is easily manufactured or handled. By setting the average particle size of the positive active material to be equal to or less than the upper limit, the electron conductivity of the positive active material layer is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher or a classifier is used to obtain a powder with a predetermined particle size. Examples of the crushing method include a method of using a mortar, a ball mill, a sand mill, a vibratory ball mill, a planetary ball mill, a jet mill, a counter jet mill, a whirling airflow type jet mill, a sieve, or the like. At the time of crushing, wet type crushing in the presence of water or an organic solvent such as hexane can also be used. As a classification method, a sieve or a wind force classifier or the like is used based on the necessity both in dry manner and in wet manner.

The content of the positive active material in the positive material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the high energy density and productivity of the positive active material layer.

The conductive agent mentioned above is not particularly limited as long as the agent is a material exhibiting conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the shape of the conductive agent include a powdery shape and a fibrous shape. As the conductive agent, one of these materials may be used singly, or two or more thereof may be mixed and used. These materials may be composited and used. For example, a material obtained by compositing carbon black with CNT may be used. Among these materials, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. The content of the conductive agent falls within the range mentioned above, thereby allowing the energy density of the secondary battery to be increased.

Examples of the binder mentioned above include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. When the content of the binder is in the above range, the active material can be stably held.

Examples of the thickener include polysaccharide polymers such as carboxymethylcellulose (CMC) and methylcellulose. When the thickener mentioned above has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate exhibits conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still more preferably 4 µm or more and 25 µm or less, and particularly preferably 5 µm or more and 20 µm or less. The average thickness of the negative substrate falls within the range mentioned above, thereby allowing the energy density per volume of the secondary battery to be increased while increasing the strength of the negative substrate.

The negative active material layer contains a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material can be appropriately selected from known negative active materials. As the negative active material for a lithium ion secondary battery, a material capable of absorbing and releasing lithium ions is usually used. Examples of the negative active material include lithium metals; metals or metalloids such as a simple substance of Si and a simple substance of Sn; metal oxides or metalloid oxides such as an oxide of Si, an oxide of Ti, and an oxide of Sn; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, one of the graphite, non-graphite carbon, oxide of Si, simple substance of Si, and lithium metal, or a combination two or more thereof is preferred, and the graphite and the non-graphite carbon are more preferred. In the negative active material layer, one of these materials may be used singly, or two or more of these materials may be mixed and used.

The term "graphite" refers to a carbon material in which the average grid spacing (d₀₀₂) of (002) plane, determined by an X-ray diffraction method before charge-discharge or in a discharged state, is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average grid spacing (d₀₀₂) of (002) plane, determined by an X-ray diffraction method before charge-discharge or in a discharged state, is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a monopolar battery that has, for use as a working electrode, a negative electrode containing a carbon material as a negative active material, and has a lithium metal for use as a counter electrode.

The "hardly graphitizable carbon" refers to a carbon material in which the d₀₀₂ is 0.36 nm or more and 0.42 nm or less.

The "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 µm or less. When the negative active material is a carbon material, a titanium-containing oxide, or a polyphosphoric acid compound, the average particle size thereof may be 1 µm or more and 100 µm or less. When the negative active material is a simple substance of Si, a simple substance of Sn, an oxide of Si, an oxide of Sn, or the like, the average particle size thereof may be 1 nm or more and 1 µm or less. By setting the average particle size of the negative active material to be equal to or greater than the above lower limit, the negative active material is easily produced or handled. By setting the average particle size of the negative active material to be equal to or less than the upper limit, the electron conductivity of the negative active material layer is improved. A crusher or a classifier is used to obtain a powder with a predetermined particle size. The crushing method and the powder classification method can be selected from, for example, the methods exemplified for the positive electrode. When the negative active material is a metal such as a lithium metal, the negative active material may have the form of a foil.

The content of the negative active material in the negative active material layer is preferably 60% by mass or more and 99% by mass or less, and more preferably 90% by mass or more and 98% by mass or less. When the content of the negative active material is in the above range, it is possible to achieve both high energy density and productivity of the negative active material layer.

### (Separator)

The nonaqueous electrolyte energy storage device includes the separator including the porous substrate layer. Examples of the form of the substrate layer of the separator include a woven fabric, a nonwoven fabric, and a microporous membrane. Among these forms, the microporous membrane is preferable from the viewpoint of safety. Examples of the material of the substrate layer of the separator include polyolefins such as polyethylene and polypropylene, polyimides, aramids, and materials obtained by combining these resins. Among these materials, the polyolefins are preferred. The main component of the substrate layer is polyolefin, thereby causing a current shutdown function to work and allowing an increase in short-circuit current to be suppressed, even when excessive heat generation is caused by an unintended short circuit or the like, and thus, high safety can be provided.

The lower limit of the porosity of the substrate layer of the separator is 44%, more preferably 48%. The porosity of the substrate layer is set to be equal to or more than the above-mentioned lower limit, thereby allowing the effect of suppressing an increase in direct-current resistance associated with a charge-discharge cycle to be further enhanced. In contrast, the upper limit of the porosity of the substrate layer is preferably 60%, more preferably 58%. The porosity of the substrate layer is set to be equal to or less than the above-mentioned upper limit, thereby allowing the strength of the substrate layer to be improved.

The porosity of the substrate layer is calculated from the following formula. Here, W represents the mass [g/cm²] of the substrate layer per unit area, ρ represents the true density [g/cm³] of the material constituting the substrate layer, and t represents the thickness of the substrate layer.$Porosity \left(%\right) = 100 - \left(W\times 100/\left(p\times t\right)\right)$

The lower limit of the air permeability of the separator mentioned above is preferably 50 [sec/100 cm³], more preferably 70 [sec/100 cm³] from the viewpoint of maintaining the strength of the separator. In contrast, the upper limit of the air permeability of the separator is preferably 300 [sec/100 cm³], more preferably 200 [sec/100 cm³]. The air permeability of the separator is set to be equal to or less than the above-mentioned upper limit, thereby allowing the effect of suppressing an increase in direct-current resistance associated with a charge-discharge cycle to be further enhanced. The "air permeability", which is also referred to as a Gurley value, indicates the number of seconds for which a certain volume of air passes through a certain area of paper under a certain pressure difference, and has a value measured in accordance with JIS-P8117 (2009).

The separator preferably has an inorganic layer on one or both surfaces of the substrate layer. The inorganic layer is a porous layer including inorganic particles. The separator has the inorganic layer, thereby allowing the decomposition product from the nonaqueous electrolyte decomposed on the negative electrode to be kept form being trapped in the inorganic layer and from reaching the positive electrode, and thus, the effect of suppressing an increase in direct-current resistance associated with a charge-discharge cycle can be further enhanced. The inorganic layer may contain other components besides the inorganic particles. Examples of the other components include binders.

Examples of the material of the inorganic particles included in the inorganic layer include inorganic compounds. Examples of the inorganic compound include oxides such as iron oxide, silicon oxide, aluminum oxide, titanium oxide, barium titanate, zirconium oxide, calcium oxide, strontium oxide, barium oxide, magnesium oxide and aluminosilicate; hydroxides such as magnesium hydroxide, calcium hydroxide and aluminum hydroxide; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite and mica, and artificial products thereof. As the inorganic compounds, a simple substance or a complex of these substances may be used alone, or two or more thereof may be used in mixture. Among these inorganic compounds, the silicon oxide, aluminum oxide, boehmite, or aluminum silicate is preferable from the viewpoint of characteristics of the secondary battery. The inorganic particles included in the inorganic layer preferably have a mass loss of 5% or less in the case of heating from room temperature to 500°C under the atmosphere, and more preferably have a mass loss of 5% or less in the case of heating from room temperature to 800°C under the atmosphere.

The lower limit of the average thickness of the negative substrate layer is preferably 5 µm, more preferably 7 µm. The upper limit of the average thickness is preferably 30 µm, more preferably 20 µm. By setting the average thickness of the substrate layer to be equal to or greater than the above lower limit, a short circuit between the positive electrode and the negative electrode can be reliably prevented. In addition, by setting the average thickness of the substrate layer to be equal to or less than the above upper limit, the energy density can be increased.

The lower limit of the average thickness of the inorganic layer mentioned above is preferably 1 µm, more preferably 2 µm. In contrast, the upper limit of the average thickness of the inorganic layer is preferably 10 µm, more preferably 6 µm. The average thickness of the inorganic layer is set to be equal to or more than the above-mentioned lower limit, thereby allowing the decomposition product from the nonaqueous electrolyte decomposed on the negative electrode to be trapped in the inorganic layer with high reliability. The average thickness of the inorganic layer is set to be equal to or less than the upper limit mentioned above, thereby allowing the energy density to be increased.

### (Nonaqueous electrolyte)

The nonaqueous electrolyte contains a cyclic disulfone compound. For the nonaqueous electrolyte, a nonaqueous electrolyte solution may be used. The nonaqueous electrolyte solution includes a nonaqueous solvent, an electrolyte salt dissolved in the nonaqueous solvent, and an additive.

The nonaqueous solvent can be appropriately selected from known nonaqueous solvents. Examples of the nonaqueous solvent include carbonates (cyclic carbonates, chain carbonates), carboxylic acid esters, phosphoric acid esters, sulfonic acid esters, ethers, amides, and nitriles. As the nonaqueous solvent, solvents in which some hydrogen atoms contained in these compounds are substituted with halogen may be used.

Examples of the cyclic carbonate include ethylene carbonate (EC), propylene carbonate (PC), butylene carbonate (BC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, the ethylene carbonate (EC) and the propylene carbonate (PC) are preferred.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, the dimethyl carbonate (DMC) and the ethyl methyl carbonate (EMC) are preferred.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₃)₂, LiN(SO₂CF₃)(SO₂C₄F₉), LiC(SO₂CF₃)₃, and LiC(SO₂C₂F₅)₃. Among these salts, an inorganic lithium salt is preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. When the content of the electrolyte salt is in the above range, it is possible to increase the ionic conductivity of the nonaqueous electrolyte solution.

The nonaqueous electrolyte solution contains a cyclic disulfone compound as an additive. The nonaqueous electrolyte solution contains a cyclic disulfone compound as an additive, thereby making the nonaqueous electrolyte energy storage device excellent in the effect of suppressing an increase in direct-current resistance associated with a charge-discharge cycle. Examples of the cyclic disulfone compound include 2-alkyl-1,3-dithietane-1,1,3,3-tetraoxide, 2,4-dialkyl-1,3-dithietane-1,1,3,3-tetraoxide, 1,3-dithiolane-1,1,3,3-tetraoxide, 2-alkyl-1,3-dithiolane-1,1,3,3-tetraoxide, 2,2-dialkyl-1,3-dithiolane-1,1,3,3-tetraoxide, 1,3-dithiane-1,1,3,3-tetraoxide, 2-alkyl-1,3-dithiane-1,1,3,3-tetraoxide, 2,2-dialkyl-1,3-dithiane-1,1,3,3-tetraoxide, 5-alkyl-1,3-dithiane-1,1,3,3-tetraoxide, 5,5-dialkyl-1,3-dithiane-1,1,3,3-tetraoxide, and 2,5-dialkyl-1,3-dithiane-1,1,3,3-tetraoxide. Among these compounds, the 2,4-dialkyl-1,3-dithietane-1,1,3,3-tetraoxide is preferred, and the 2,4-diethyl-1,3-dithietane-1,1,3,3-tetraoxide and the 2,4-dibutyl-1,3-dithietane-1,1,3,3-tetraoxide are more preferred. Examples of the alkyl group of the cyclic disulfone compound include a methyl group, an ethyl group, a propyl group, a butyl group, and a hexyl group. One of the cyclic sulfone compounds may be used, or two or more thereof may be used in mixture.

The lower limit of the content of the cyclic disulfone compound is preferably 0.5% by mass, more preferably 0.7% by mass with respect to the total mass of the nonaqueous electrolyte. In contrast, the upper limit of the content of the cyclic disulfone compound is preferably 1.5% by mass, more preferably 1.2% by mass with respect to the total mass of the nonaqueous electrolyte solution. The content of the cyclic disulfone compound is set to be equal to or more than the above-mentioned lower limit or equal to or less than the above-mentioned upper limit, thereby allowing the effect of suppressing an increase in direct-current resistance associated with a charge-discharge cycle to be further enhanced.

The nonaqueous electrolyte energy storage device may contain other additives other than the cyclic disulfone compound. Examples of the other additive include halogenated carbonic acid esters such as vinylene carbonate (VC), fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. Among these examples, the vinylene carbonates are preferred for forming a favorable negative electrode surface protective film. One of the other additives may be used, or two or more thereof may be used in mixture.

The lower limit of the content of the other additives contained in the nonaqueous electrolyte solution is preferably 0.2% by mass, more preferably 0.4% by mass with respect to the total mass of the nonaqueous electrolyte solution. In contrast, the upper limit of the content of the other additives is preferably 2.0% by mass, more preferably 1.0% by mass with respect to the total mass of the nonaqueous electrolyte solution. The content of other additives is set to be equal to or more than the above-mentioned lower limit or equal to or less than the above-mentioned upper limit, thereby allowing a favorable negative electrode surface protective film to be reliably formed while suppressing an initial increase in direct-current resistance.

For the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium and calcium. Examples of the solid electrolyte include a sulfide solid electrolyte, an oxide solid electrolyte, an oxynitride solid electrolyte, and a polymer solid electrolyte.

Examples of the sulfide solid electrolyte include Li₂S-P₂S₅, LiI-Li₂SP₂S₅, and Li₁₀Ge-P₂S₁₂.

### <Configuration of nonaqueous electrolyte energy storage device>

The shape of the energy storage device according to the present embodiment is not particularly limited, and examples thereof include cylindrical batteries, prismatic batteries, flattened batteries, coin batteries and button batteries.

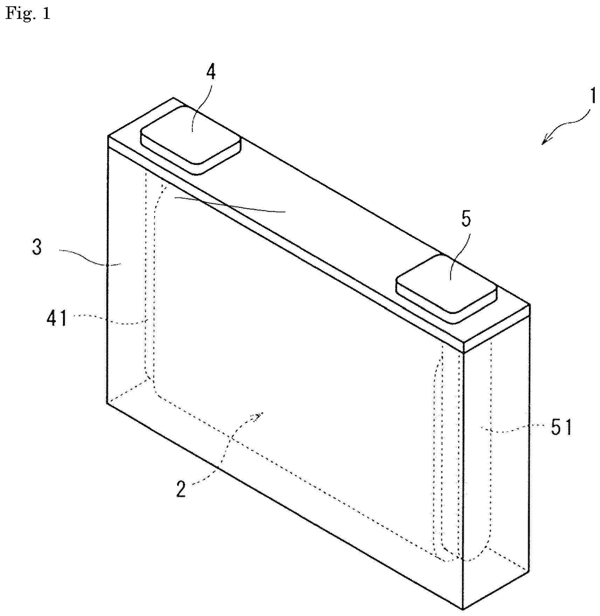

Fig. 1 shows a nonaqueous electrolyte energy storage device 1 as an example of a prismatic battery. Fig. 1 is a view showing an inside of a case in a perspective manner. An electrode assembly 2 including a positive electrode and a negative electrode which are wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Configuration of energy storage apparatus>

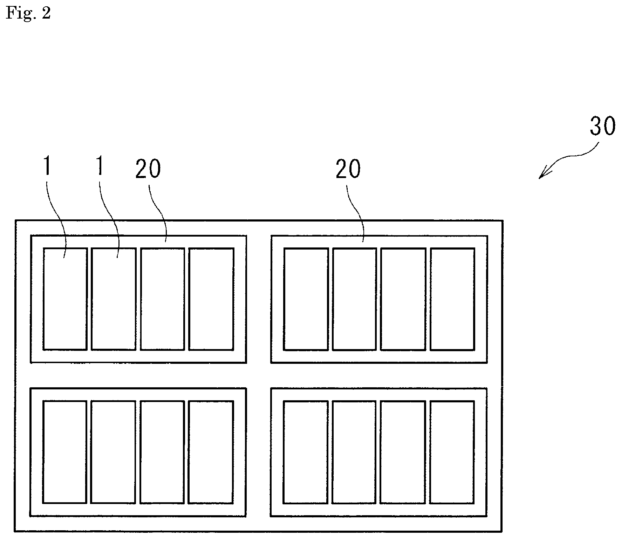

The nonaqueous electrolyte energy storage device according to the present embodiment can be mounted as an energy storage apparatus configured by assembling a plurality of nonaqueous electrolyte energy storage devices 1 on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage apparatus. Fig. 2 shows an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices 1.

### <Method for manufacturing nonaqueous electrolyte energy storage device>

A method for manufacturing the nonaqueous electrolyte energy storage device of the present embodiment can be appropriately selected from known methods. The manufacturing method includes, for example, preparing an electrode assembly, preparing a nonaqueous electrolyte containing the cyclic disulfone compound mentioned above, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with the above-described separator interposed therebetween.

Housing the nonaqueous electrolyte in a case can be appropriately selected from known methods. For example, when a nonaqueous electrolyte solution is used for the nonaqueous electrolyte, the nonaqueous electrolyte solution may be injected from an inlet formed in the case, followed by sealing the inlet.

### <Other embodiments>

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

In the above embodiment, although the case where the nonaqueous electrolyte energy storage device is used as a nonaqueous electrolyte secondary battery (for example, lithium ion secondary battery) that can be charged and discharged has been described, the type, shape, size, capacity, and the like of the nonaqueous electrolyte energy storage device are arbitrary. The present invention can also be applied to capacitors such as various secondary batteries, electric double layer capacitors, or lithium ion capacitors.

### EXAMPLES

Hereinafter, the present invention will be described more specifically with reference to examples. The present invention is not limited to the following examples.

### [Examples 1 to 3 and Comparative Examples 1 to 5]

### (Fabrication of positive electrode)

A positive electrode containing, as a positive active material, NCM (LiNi_{0.5}Co_{0.2}Mn_{0.3}O₂) having an α-NaFeO₂-type crystal structure was fabricated. Prepared was a positive composite paste containing the positive active material, a polyvinylidene fluoride (PVDF) as a binder, and acetylene black as a conductive agent, with N-methyl-2-pyrrolidone (NMP) as a dispersion medium. The mixing ratios of the positive active material, binder, and conductive agent were 93 : 3 : 4 (in terms of solid content) in ratio by mass. The positive composite paste was applied to both surfaces of a positive substrate made of an aluminum foil of 15 µm in thickness to reach a coating mass (weight per unit area, in terms of solid content) of 20 mg/cm², dried, and pressed to form a positive active material layer, thereby providing the positive electrode.

### (Fabrication of negative electrode)

Prepared was a negative composite paste containing graphite as a negative active material, a styrene-butadiene rubber (SBR) as a binder, and a carboxymethyl cellulose (CMC) as a thickener with water as a dispersion medium. The mixing ratios of the negative active material, binder, and thickener were 97 : 2 : 1 (in terms of solid content) in ratio by mass. The negative composite paste was applied to both surfaces of a negative substrate made of a copper foil of 10 µm in thickness to reach a coating mass (weight per unit area, in terms of solid content) of 10 mg/cm², dried, and pressed to form a negative active material layer, thereby providing negative electrodes according to the examples and comparative examples.

### (Preparation of nonaqueous electrolyte)

LiPF₆ was dissolved at a concentration of 1 mol/dm³ in a nonaqueous solvent of an ethylene carbonate (EC), a propylene carbonate (PC), and an ethyl methyl carbonate (EMC) mixed at a volume ratio of 25 : 5 : 70. To the nonaqueous electrolyte, a vinylene carbonate and 2,4-diethyl-1,3-dithietane-1, 1,3,3-tetraoxide or 2,4-dibutyl-1,3-dithietane-1, 1,3,3-tetraoxide were added as additives to reach the amounts listed in Table 1. It is to be noted that "-" in Table 1 means that the corresponding component is not contained.

### (Fabrication of nonaqueous electrolyte energy storage device)

Next, the positive electrode and the negative electrode were stacked with a separator interposed therebetween, the separator including a microporous membrane-shaped substrate layer (average thickness: 12 µm) made of a polyethylene and an inorganic layer (average thickness: 4 µm) including inorganic particles and a binder formed on one side of the substrate layer, with the porosity and air permeability of the substrate layer as listed in Table 1, thereby preparing an electrode assembly. The electrode assembly was housed into an aluminum prismatic case, and a positive electrode terminal and a negative electrode terminal were attached. The nonaqueous electrolyte was injected into the case, and then, the inlet was sealed, thereby providing nonaqueous electrolyte energy storage devices according to the examples and comparative examples with a rated capacity of 0.9 Ah.

### [Evaluation]

### (Initial charge-discharge)

The obtained respective nonaqueous electrolyte energy storage devices were subjected to the initial charge-discharge under the following conditions. At 25°C, constant current constant voltage charge was performed at a charge current of 0.2 C and an end-of-charge voltage of 4.25 V. With regard to the charge termination conditions, charge was performed until the charge current reached 0.01 C. Thereafter, a pause time of 10 minutes was provided. Thereafter, constant current discharge was performed at a discharge current of 0.2 C and an end-of-discharge voltage of 2.75 V, and then a pause time of 10 minutes was provided. This charge-discharge was performed 2 cycles.

### (Initial direct-current resistance value)

Each of the nonaqueous electrolyte energy storage devices was subjected to constant current charge at a charge current of 0.2 C at 25°C to adjust the SOC to 50%, and then discharged at 25°C for 30 seconds at each discharge current of 0.2 C, 0.5 C, and 1.0 C in this order. The relationship between the current at each discharge current and the voltage at 10 seconds after the start of the discharge was plotted, and the direct-current resistance value was determined from the slope of a straight line obtained from 3 points plotted, and regarded as an "initial direct-current resistance".

### (Charge-discharge cycle test)

Then, each of the obtained nonaqueous electrolyte energy storage devices was subjected to the following charge-discharge cycle test. At 60°C, constant current constant voltage charge was performed at a charge current of 1 C and an end-of-charge voltage of 4.25 V. With regard to the charge termination conditions, charge was performed until the current value reached 0.01 C. Thereafter, a pause time of 10 minutes was provided. Constant current discharge was performed at a discharge current of 1 C and an end-of-discharge voltage of 2.75 V, and then a pause time of 10 minutes was provided. This charge-discharge was performed 300 cycles.

### (Direct-current resistance increase rate)

After the charge-discharge cycle test, the direct-current resistance of each nonaqueous electrolyte energy storage device was determined in the same manner as in the above-mentioned "initial direct-current resistance value", and regarded as "the direct-current resistance after the charge-discharge cycle test". The direct-current resistance increase rate after the 300 cycles at 60°C was obtained by dividing the difference between the direct-current resistance value after the charge-discharge cycle test and the initial direct-current resistance value by the initial direct-current resistance value. The direct-current resistance increase rate (DCR increase rate) is shown in Table 1.

**[Table 1]**

| | Separator | | Contents of nonaqueous electrolyte and additive [% by mass] | | | Evaluation |
|---|---|---|---|---|---|---|
| | Porosity of substrate layer [%] | Air permeability [sec/100 cm³] | Vinylene carbonate | 2,4-dibutyl-1,3-dithietane-1, 1,3,3 tetraoxide | 2,4-diethyl-1,3-dithietane-1, 1,3,3 tetraoxide | DCR increase rate after 300 cycles at 60°C 25°C [%] |
| Example 1 | 55 | 80 | 0.5 | 0.7 | - | 46.6 |
| Example 2 | 55 | 80 | 0.5 | 1.0 | - | 47.9 |
| Example 3 | 55 | 80 | 0.5 | - | 0.7 | 47.3 |
| Comparative Example 1 | 40 | 150 | 0.5 | 0.7 | - | 49.3 |
| Comparative Example 2 | 40 | 150 | 0.5 | 1.0 | - | 49.5 |
| Comparative Example 3 | 55 | 80 | 0.5 | - | - | 57.0 |
| Comparative Example 4 | 55 | 80 | 1.0 | - | - | 53.0 |
| Comparative Example 5 | 40 | 150 | 0.5 | - | - | 56.6 |

As shown in Table 1 above, Examples 1 to 3 in which the porosity of the substrate layer of the separator was 44% or more, with the nonaqueous electrolyte containing the cyclic disulfone compound, were 48% or less in the direct-current resistance increase rate after the charge-discharge cycle, and excellent in the effect of suppressing an increase in direct-current resistance associated with charge-discharge cycles. In contrast, Comparative Examples 1 and 2 in which the porosity of the substrate layer of the separator was less than 44%, and Comparative Examples 3 to 5 with the nonaqueous electrolyte containing no cyclic disulfone compound were inferior in the effect of suppressing an increase in direct-current resistance associated with a charge-discharge cycle.

From the foregoing results, it has been demonstrated that the nonaqueous electrolyte energy storage device is excellent in the effect of suppressing an increase in direct-current resistance associated with a charge-discharge cycle. The nonaqueous electrolyte energy storage device is suitably used as a nonaqueous electrolyte energy storage device for use as a power source for electronic equipment such as personal computers and communication terminals, automobiles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a separator including a porous substrate layer; and
a nonaqueous electrolyte,
wherein
the substrate layer has a porosity of 44% or more, and
the nonaqueous electrolyte contains a cyclic disulfone compound, wherein the separator includes an inorganic layer layered on the substrate layer, wherein the lower limit of the average thickness of the inorganic layer is 1 µm and the upper limit of the average thickness of the inorganic layer is 10 µm.

2. The nonaqueous electrolyte energy storage device according to claim 1, wherein the cyclic disulfone compound is 2,4-dialkyl-1,3-dithietane-1,1,3,3-tetraoxide.

3. The nonaqueous electrolyte energy storage device according to claim 1 or 2, wherein nonaqueous electrolyte is substantially composed only of a lithium salt, a carbonate, and a cyclic disulfone compound.

4. The nonaqueous electrolyte energy storage device according to any one of claims 1 to 3, wherein the substrate layer has a porosity of 48% or more.

5. The nonaqueous electrolyte energy storage device according to any one of claims 1 to 4, wherein the substrate layer has a porosity of 60% or less.

6. The nonaqueous electrolyte energy storage device according to any one of claims 1 to 5, wherein a content of the cyclic disulfone compound contained in the nonaqueous electrolyte is 0.5% by mass or more with respect to a total mass of the nonaqueous electrolyte.

7. The nonaqueous electrolyte energy storage device according to any one of claims 1 to 6, wherein a content of the cyclic disulfone compound contained in the nonaqueous electrolyte is 1.5% by mass or less with respect to a total mass of the nonaqueous electrolyte.

8. The nonaqueous electrolyte energy storage device according to any one of claims 1 to 7, comprising a positive electrode including a positive active material,
wherein the positive active material is one of, or a combination of two or more of lithium-transition metal composite oxides that have an α-NaFeO₂-type crystal structure, lithium-transition metal composite oxides that have a spinel-type crystal structure, and polyanion compounds.

9. The nonaqueous electrolyte energy storage device according to any one of claims 1 to 8, comprising a negative electrode including a negative active material,
wherein the negative active material is one of graphite, non-graphite carbon, an oxide of Si, a simple substance of Si, and a lithium metal, or a combination two or more thereof.

10. The nonaqueous electrolyte energy storage device according to any one of claims 1 to 9, wherein the nonaqueous electrolyte energy storage device is a lithium ion secondary battery.

11. An electronic device comprising the nonaqueous electrolyte energy storage device according to any one of claims 1 to 10.

12. An automobile comprising the nonaqueous electrolyte energy storage device according to any one of claims 1 to 10.

## Patentansprüche

1. Energiespeichervorrichtung mit nichtwässrigem Elektrolyten, umfassend:
einen Separator, der eine poröse Substratschicht aufweist; und
einen nichtwässrigen Elektrolyten,
wobei
die Substratschicht eine Porosität von 44 % oder mehr aufweist, und
der nichtwässrige Elektrolyt eine cyclische Disulfonverbindung enthält, wobei der Separator eine anorganische Schicht aufweist, die auf die Substratschicht aufgebracht ist, wobei die untere Grenze der durchschnittlichen Dicke der anorganischen Schicht 1 µm beträgt und die obere Grenze der durchschnittlichen Dicke der anorganischen Schicht 10 µm beträgt.

2. Energiespeichervorrichtung mit nichtwässrigem Elektrolyten nach Anspruch 1, wobei die cyclische Disulfonverbindung 2,4-Dialkyl-1,3-dithietan-1,1,3,3-tetraoxid ist.

3. Energiespeichervorrichtung mit nichtwässrigem Elektrolyten nach Anspruch 1 oder 2, wobei der nichtwässrige Elektrolyt im Wesentlichen nur aus einem Lithiumsalz, einem Carbonat und einer cyclischen Disulfonverbindung besteht.

4. Energiespeichervorrichtung mit nichtwässrigem Elektrolyten nach einem der Ansprüche 1 bis 3, wobei die Substratschicht eine Porosität von 48 % oder mehr aufweist.

5. Energiespeichervorrichtung mit nichtwässrigem Elektrolyten nach einem der Ansprüche 1 bis 4, wobei die Substratschicht eine Porosität von 60 % oder weniger aufweist.

6. Energiespeichervorrichtung mit nichtwässrigem Elektrolyten nach einem der Ansprüche 1 bis 5, wobei ein Gehalt der cyklischen Disulfonverbindung, die in den dem nichtwässrigen Elektrolyten enthalten ist, 0,5 Masse-% oder mehr in Bezug auf eine Gesamtmasse des nichtwässrigen Elektrolyten beträgt.

7. Energiespeichervorrichtung mit nichtwässrigem Elektrolyten nach einem der Ansprüche 1 bis 6, wobei ein Gehalt der cyklischen Disulfonverbindung, die in dem nichtwässrigen Elektrolyten enthalten ist, 1,5 Masse-% oder weniger in Bezug auf eine Gesamtmasse des nichtwässrigen Elektrolyten beträgt.

8. Energiespeichervorrichtung mit nichtwässrigem Elektrolyten nach einem der Ansprüche 1 bis 7, umfassend eine positive Elektrode, die ein positives Aktivmaterial aufweist,
wobei das positive Aktivmaterial eines von oder eine Kombination aus zwei oder mehr von Lithium-Übergangsmetall-Verbundoxiden mit einer Kristallstruktur vom Typ α-NaFeO₂, Lithium-Übergangsmetall-Verbundoxiden mit einer Kristallstruktur vom Spinell-Typ und Polyanionverbindungen ist.

9. Energiespeichervorrichtung mit nichtwässrigem Elektrolyten nach einem der Ansprüche 1 bis 8, umfassend eine negative Elektrode, die ein negatives Aktivmaterial aufweist,
wobei das negative Aktivmaterial Graphit, Nicht-Graphit-Kohlenstoff, ein Oxid von Si, eine einfache Substanz aus Si und Lithiummetall oder eine Kombination aus zwei oder mehr davon ist.

10. Energiespeichervorrichtung mit nichtwässrigem Elektrolyten nach einem der Ansprüche 1 bis 9, wobei die Energiespeichervorrichtung mit nichtwässrigem Elektrolyten eine Lithium-Ionen-Sekundärbatterie ist.

11. Elektronische Vorrichtung, umfassend die Energiespeichervorrichtung mit nichtwässrigem Elektrolyten nach einem der Ansprüche 1 bis 10.

12. Kraftfahrzeug, umfassend die Energiespeichervorrichtung mit nichtwässrigem Elektrolyten nach einem der Ansprüche 1 bis 10.

## Revendications

1. Dispositif de stockage d'énergie à électrolyte non aqueux comprenant :
un séparateur comportant une couche de substrat poreuse ; et
un électrolyte non aqueux,
dans lequel
la couche de substrat présente une porosité supérieure ou égale à 44 %, et
l'électrolyte non aqueux contient un composé de disulfone cyclique, le séparateur comportant une couche non organique appliquée sur la couche de substrat, la limite inférieure de l'épaisseur moyenne de la couche non organique est de 1 µm et la limite supérieure de l'épaisseur moyenne de la couche non organique est de 10 µm.

2. Dispositif de stockage d'énergie à électrolyte non aqueux selon la revendication 1, dans lequel le composé de disulfone cyclique est le 2,4-dialkyl-1,3-dithiétane-1,1,3,3-tétraoxyde.

3. Dispositif de stockage d'énergie à électrolyte non aqueux selon la revendication 1 ou 2, dans lequel l'électrolyte non aqueux est substantiellement composé uniquement d'un sel de lithium, d'un carbonate, et d'un composé de disulfone cyclique.

4. Dispositif de stockage d'énergie à électrolyte non aqueux selon l'une quelconque des revendications 1 à 3, dans lequel la couche de substrat présente une porosité supérieure ou égale à 48 %.

5. Dispositif de stockage d'énergie à électrolyte non aqueux selon l'une quelconque des revendications 1 à 4, dans lequel la couche de substrat présente une porosité inférieure ou égale à 60 %.

6. Dispositif de stockage d'énergie à électrolyte non aqueux selon l'une quelconque des revendications 1 à 5, dans lequel une teneur en composé de disulfone cyclique contenu dans l'électrolyte non aqueux est supérieure ou égale à 0,5 % en masse par rapport à une masse totale de l'électrolyte non aqueux.

7. Dispositif de stockage d'énergie à électrolyte non aqueux selon l'une quelconque des revendications 1 à 6, dans lequel une teneur en composé de disulfone cyclique contenu dans l'électrolyte non aqueux est inférieure ou égale à 1,5 % en masse par rapport à une masse totale de l'électrolyte non aqueux.

8. Dispositif de stockage d'énergie à électrolyte non aqueux selon l'une quelconque des revendications 1 à 7, comprenant une électrode positive comportant un matériau actif positif,
dans lequel le matériau actif positif est l'un d'oxydes composites de lithium et de métaux de transition qui présentent une structure cristalline de type α-NaFeO₂, d'oxydes composites de lithium et de métaux de transition qui présentent une structure cristalline de type spinelle ou de composés polyanioniques, ou une combinaison de deux de ceux-ci ou plus.

9. Dispositif de stockage d'énergie à électrolyte non aqueux selon l'une quelconque des revendications 1 à 8, comprenant une électrode négative comportant un matériau actif négatif,
dans lequel le matériau actif négatif est du graphite, du carbone non graphitique, un oxyde de Si, le corps simple Si ou un lithium métallique, ou une combinaison de deux de ceux-ci ou plus.

10. Dispositif de stockage d'énergie à électrolyte non aqueux selon l'une quelconque des revendications 1 à 9, dans lequel le dispositif de stockage d'énergie à électrolyte non aqueux est une batterie secondaire lithium-ion.

11. Dispositif électronique comprenant le dispositif de stockage d'énergie à électrolyte non aqueux selon l'une quelconque des revendications 1 à 10.

12. Automobile comprenant le dispositif de stockage d'énergie à électrolyte non aqueux selon l'une quelconque des revendications 1 à 10.
